# EUROPÄISCHE PATENTSCHRIFT

(11) **EP 2 855 552 B1**
(45) Veröffentlichungstag und Bekanntmachung des Hinweises auf die Patenterteilung: **24.10.2018**
(21) Anmeldenummer: 13724842.3
(22) Anmeldetag: 24.05.2013
(51) Int. Cl.: C08G 18/66, C08G 18/72, C08G 18/79, C08G 18/48, C08L 97/00, C09J 175/04, C08G 18/64, B65D 39/00

(54) **FORMKÖRPER AUS GRANULATEN UND 2K-PU-KLEBSTOFFEN, ENTHALTEND ALIPHATISCHE ISOCYANATE.**
SHAPED ARTICEL FROM GRANULES AND TWO-COMPONENT-PU-ADHESIVE BASED ON ALIPHATIC ISOCYANATES.
ARTICLE MOULÉ FABRIQUÉ DES GRANULES ET D'UN ADHESIF POLYURÉTHANE À DEUX-COMPOSANTS À BASE DES ISOCYANATES ALIPHATIQUES.

(30) Priorität: 24.05.2012 DE 102012208689
(43) Veröffentlichungstag der Anmeldung: 08.04.2015
(73) Patentinhaber: Henkel AG & Co. KGaA, 40589 Düsseldorf (DE)
(72) Erfinder: GARMANN, Helga, 40724 Hilden (DE); PUCK, Claus-Heinrich, 73479 Ellwangen (DE); PASQUIER, Thierry, F-69400 Arnas (FR); LOURENCO, Antonio, P-3150-255 Ega (PT)
(86) Internationale Anmeldenummer: PCT/EP2013/060722
(87) Internationale Veröffentlichungsnummer: WO 2013/174970

(56) Entgegenhaltungen:
- DE-A1- 10 024 097
- DE-A1-102006 016 054
- US-A1- 2010 163 153

## Beschreibung

Die Erfindung betrifft elastische Formkörper aus Cellulose- oder Lignin-haltigen Granulaten, die in Form eines Korkstopfen ausgebildet und mit 2K-PU-Klebstoffen mit aliphatischen Isocyanaten verklebt sind. Die Erfindung betrifft weiterhin ein Verfahren zum Verkleben von Granulaten aus natürlichen Rohstoffen, wie Cellulose- oder Lignin-haltigen Materialien.

Die WO2008/048129 beschreibt Korkstopfen, die aus granuliertem Kork mit einem Klebstoff bestehen. Es wird die Auswahl der Korkgranulate beschrieben, der Klebstoff wird allgemein als Polyurethanklebstoff hergestellt mit TDI oder MDI beschrieben.

Die WO2011/112813 beschreibt verklebte Gegenstände aus elastomeren Granulaten oder cellulosehaltigen Granulaten, wobei ein Klebstoff auf Basis von Polyolen und einem Isocyanathaltigen Prepolymer beschrieben wird. Als Isocyanate werden aromatische Isocyanate auf Basis von MDI eingesetzt.

Die WO2007/047073 beschreibt verklebte Gegenstände aus Granulaten und Klebstoffen. Diese werden so beschrieben, dass als Polymerbestandteil Polyetherpolyole mit einer Funktionalität von 1 bis 6 enthalten sein müssen, wobei diese Polyole Aminogruppen aufweisen. Als Granulate werden organische Granulate sowie anorganische Granulate aufgezählt.

In der WO 00/64647 wird ein Verfahren beschrieben, um auf einem Substrat eine Beschichtung zu erzeugen, die die Aufgabe hat, die Diffusion von geschmacks- oder geruchsaktiven Verbindungen zu verhindern. Das in dem Überzug vorhandene Polymer soll die Migration der Bestandteile verhindern. Dabei werden verschiedene Polymere aufgezählt.

Die DE 10 2006 016 054 A1 offenbart ein Verfahren zum Beschichten von Korkstopfen mit flüssigen reaktiven Polyurethanbeschichtungsmitteln, wobei die Beschichtung der Zurückhaltung von aromaaktiven Substanzen aus dem Kork dient. Dazu können 1K- und 2K-PU-Klebstoffe auf der Basis von aliphatischen, cycloaliphatischen, arylaliphatischen oder aromatischen mehrwertigen Isocyanaten verwendet werden. Konkret werden in Ausführungsbeispiele 1K- und 2K-PU-Klebstoffe basierend auf aromatischen Isocyanaten offenbart.

Die DE 10 2008 026 266 A1 beschreibt Formkörper aus Granulaten aus Olivenkernen und vernetzten Klebstoffen, dadurch gekennzeichnet, dass Granulate mit einer Korngröße unter 10 mm enthalten sind, sowie als Klebstoffe reaktive Klebstoffe ausgewählt aus 2K-Epoxidklebstoffen, 2K-PU-Klebstoffen oder 1K-PU-Klebstoffen, wobei 5 bis 100% Klebstoff bezogen auf 100% Granulat eingesetzt werden. Als für die PU-Klebstoffe geeignete Isocyanate werden aromatische, aliphatische oder cycloaliphatische Di- oder Triisocyanate, genannt. Aromatische Isocyanate sind bevorzugt. Konkret werden in den Ausführungsbeispielen 2K-PU-Klebstoffe basierend auf MDI offenbart. Die Formkörper finden Verwendung als Boden- oder Schallschutzelement.

Die EP 1270703 beschreibt das Verkleben von Korkstopfen an der Unterseite mit Scheiben von Naturkork, wobei als Klebstoff ein 1K-PU-Schmelzklebstoff beschrieben wird. Solche Schmelzklebstoffe sind bei Raumtemperatur fest. Die 1K-PU-Schmelzklebstoffe können auf aromatischen, aliphatischen oder cycloaliphatischen Diisocyanaten basieren. Das Ausführungsbeispiel basiert auf MDI.

DE 100 24 097 beschreibt einen Verbundwerkstoff aus einem Polyurethangel und darin verteilten grobkörnigen Feststoffteilchen, die einen Durchmesser zwischen 0,1 mm bis 1 cm aufweisen.

Beim Verkleben von natürlichen Materialien aus Granulaten zu Formkörpern ist bei der Auswahl des Klebstoffs auf das Anwendungsgebiet zu achten. Beispielsweise soll bei Produkten, die mit Haut oder Lebensmitteln in Kontakt kommen, auf den Einsatz von gesundheitlich bedenklichen Substanzen verzichtet werden. Technisch müssen spezielle Anforderungen erfüllt werden. Eine Anforderung ist beispielsweise, dass Stopfen oder Fußbodenbeläge aus natürlichen Rohstoffen, beispielsweise Kork, elastisch aufgebaut sein sollen. Ebenso müssen Korkstopfen einen festen Sitz in der Flasche sicherstellen. Die Verklebung muss auch unter Einwirkung von Feuchtigkeit dauerhaft sein und soll keine Bestandteile an die Oberfläche der Verklebungsschicht ausschwitzen. Bei Verwendung von lösemittelhaltigen Klebstoffen ist eine lange Vernetzungs- und Trocknungszeit üblich. Ein Verkleben mit PU-Schmelzklebstoffen erfordert höhere Temperaturen bei der Applikation, das ist technisch aufwendig. Außerdem ist der Vernetzungsprozess im Formkörper danach von der Diffusion des Wassers als vernetzender Substanz abhängig, das erfordert längere Vernetzungszeiten.

Aufgabe der vorliegenden Erfindung ist es deswegen, Formkörper aus Kork zur Verfügung zu stellen sowie ein Verfahren zu ihrer Herstellung, bei dem Korkgranulate, mit einem flüssigen reaktiven Klebstoff verklebt werden. Dabei soll eine gute Durchmischung Klebstoff/Granulat sichergestellt werden. Weiterhin soll eine schnelle kontrollierte Vernetzung ermöglicht werden. Die erhaltenen Formkörper sollen eine hohe Elastizität aufweisen, dabei soll eine Volumenkontraktion unter Druck reversibel sein, ohne die Verklebung zu schädigen. Es sollen migrationsfähige Bestandteile, wie beispielsweise monomere Isocyanate, möglichst vermieden werden. Auf den Einsatz toxischer Substanzen, wie z.B. TDI, soll verzichtet werden. Vorzugsweise soll eine Migration von möglichen geschmacks- oder geruchsaktiven Verbindungen, wie beispielsweise Trichloranisol, aus dem Granulat unterbunden werden

Die Aufgabe wird gelöst durch einen Formkörper umfassend ein Granulat aus pflanzlichen Rohstoffen, insbesondere Korkgranulaten, mit einer Teilchengröße von 0,5 bis 15 mm verklebt mit einem 2K-Polyurethan-Klebstoff, wobei der Klebstoff bei Raumtemperatur flüssig ist und als Isocyanatkomponente Oligomere auf Basis von aliphatischen Isocyanaten enthält.

Die Erfindung betrifft weiterhin ein Verfahren zum Verkleben von Granulaten aus natürlichen, pflanzlichen Rohstoffen zu Formkörpern, wobei ein flüssiger 2K-PU-Klebstoff aus einer Polyolkomponente und einer Isocyanatkomponente mit den Granulaten vermischt wird, in einer Menge, dass die Granulate von dem Klebstoff umhüllt werden, das Gemisch geformt wird und danach bei erhöhter Temperatur ausgehärtet wird, wobei ein erfindungsgemäßer Klebstoff eingesetzt wird.

Ein Bestandteil der Formkörper sind Granulate aus natürlichen Rohstoffen. Es kann sich dabei um teilchenförmige oder faserförmige Materialien handeln, die aus nachwachsenden Rohstoffen erhalten werden können, insbesondere pflanzliche Materialien. Bevorzugt handelt es sich um Korkgranulate. Diese Granulate werden aus natürlichem Kork hergestellt, beispielsweise auch als Nebenprodukt bei der Verarbeitung von Kork. Es können aber auch andere pflanzliche Rohstoffe aus Cellulose oder Lignin anteilig eingesetzt werden. Als Ausgangsmaterial sind pflanzliche Materialien geeignet, beispielsweise Baumwolle, Hanf, Bast, Sisal, Koskosfasern, Yuccafasern oder Manila, Granulate aus Kokosschalen oder Nussschalen; diese können auch als Gemisch vorliegen. Es ist erfindungsgemäß zweckmäßig, wenn mindestens 50 Gew.-% der Granulate aus Kork bestehen, es können auch ausschließlich Korkgranulate eingesetzt werden. Es soll sich um gemahlene Bestandteile handeln. Die Granulatteilchen sollen eine Teilchengröße von 0,5 bis 15 mm aufweisen als Faser, Späne, Pulver oder Granulat, insbesondere von 1,0 mm bis 10 mm. Die Teilchengröße wird dabei mit Hilfe der Siebanalyse bestimmt, wie in den Normen DIN 66165-1:1987-04 und DIN 66165-2:1987-04 beschrieben. Ein Granulat mit Teilchengrößen in einem gewünschten Bereich lässt sich beispielsweise erhalten, in dem durch Verwendung von zwei Sieben, die sich in ihren Öffnungsweiten unterscheiden, Granulatteilchen, die zu klein oder zu groß sind, vom eingesetzten Siebgut abgetrennt werden. Es können demnach auch unterschiedliche Teilchengrößen als Gemisch vorliegen.

Die erfindungsgemäß geeigneten 2K-PU-Klebstoffe bestehen aus zwei Komponenten, die getrennt lagerstabil sind. Komponente A soll eine Komponente sein, die ein oder mehrere Polyole umfasst, die im Durchschnitt 2 bis 10 OH-Gruppen aufweisen. Die Komponente B enthält mindestens eine oligomere Verbindung auf Basis von aliphatischen Diisocyanaten, gegebenenfalls können auch anteilig aromatische Polyisocyanate enthalten sein. Beide Komponenten A und/oder B können zusätzlich weitere Zusatzstoffe und Additive enthalten, die die Eigenschaften des Klebstoffs modifizieren.

Im Rahmen der Erfindung ist eine Vielzahl von mehrfunktionellen Alkoholen zur Herstellung der OH-Komponente geeignet. Diese sollen 2 bis 10, insbesondere von 2 bis 6 OH-Gruppen pro Molekül aufweisen. Bei den Verbindungen mit mehreren OH-Gruppen kann es sich um solche handeln, die endständige OH-Gruppen tragen oder es können Verbindungen sein, die über die Kette verteilt seitenständig OH-Gruppen aufweisen. Bei den OH-Gruppen handelt es sich um solche, die mit Isocyanaten reagieren können. Es kann sich um primäre, sekundäre oder tertiäre OH-Gruppen handeln, bevorzugt sind jedoch primäre oder sekundäre OH-Gruppen. Beispiele für geeignete Polyole sind solche auf Basis von Polyethern, Polyalkylenen oder Polyestern.

Geeignete Polyole sind beispielsweise aliphatische und/oder aromatische Alkohole mit 2 bis 6, vorzugsweise 2 bis 4 OH-Gruppen pro Molekül. Die OH-Gruppen können sowohl primär als auch sekundär sein. Zu den geeigneten aliphatischen Alkoholen zählen beispielsweise Diole, wie Ethylenglykol, Propylenglykol, Butandiol-1,4, Pentandiol-1,5, Hexandiol-1,6, und deren höhere Homologe oder Isomere. Als mehrwertige Polyole sind beispielsweise Glycerin, Trimethylolpropan oder Pentaerythrit geeignet. Es können auch höherfunktionelle Zuckeralkohole eingesetzt werden, beispielsweise hydrierte Zuckeralkohole wie Sorbitol, Inositol, Mannitol, Threitol, Erythritol, Xylose, Lyxose, Glucose, Galactose, Mannose, Saccharose, Lactose, Trehalose, Maltose.

Weiterhin sind Polyesterpolyole geeignet. Derartige Polyesterpolyole umfassen die Umsetzungsprodukte von polyfunktionellen, vorzugsweise difunktionellen Alkoholen, gegebenenfalls zusammen mit geringen Mengen an trifunktionellen Alkoholen, und polyfunktionellen, vorzugsweise difunktionellen und/oder trifunktionellen Carbonsäuren. Anstatt freier Polycarbonsäuren können auch die entsprechenden Polycarbonsäureanhydride oder entsprechende Polycarbonsäureester mit Alkoholen mit vorzugsweise 1 bis 3 C-Atomen eingesetzt werden. Zur Herstellung derartiger Polyesterpolyole geeignet sind insbesondere Hexandiol, Butandiol, Propandiol, Ethylenglykol, 1,4-Hydroxymethyl-cyclohexan, 2-Methyl-1,3-propandiol, Triethylenglykol, Tetraethylenglykol, Ethylenglykol, Polyethylenglykol, Dipropylenglykol, Polypropylenglykol, Dibutylenglykol und Gemische verschiedener Alkohole. Die Polycarbonsäuren können aliphatisch, cycloaliphatisch oder aromatisch sein, beispielsweise Azelainsäure, Korksäure, Sebacinsäure, Maleinsäure, Fumarsäure, Dimerfettsäure oder Trimerfettsäure. Die genannten Säuren können einzeln oder als Gemische aus zwei oder mehr davon eingesetzt werden. Eine weitere Gruppe geeigneter Polyesterolyole sind Polylactone, beispielsweise Polyester auf der Basis von ε-Caprolacton. Dem Fachmann sind solche OH-funktionelle Polyesterpolyole bekannt.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Beispiele solcher Polyole sind Rizinusöl oder Dimerdiole.

Insbesondere geeignet sind Polyetherpolyole als Umsetzungsprodukte niedermolekularer polyfunktioneller Alkohole mit Alkylenoxiden. Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen, Hexandiolen oder 4,4'-Dihydroxy-diphenylpropan mit Ethylenoxid, Propylenoxid, Butylenoxid oder Gemischen aus zwei oder mehr davon. Ferner sind auch die Umsetzungsprodukte polyfunktioneller Alkohole, wie Glycerin, Trimethylolethan oder Trimethylolpropan, Pentaerythrit oder Zuckeralkohole mit den genannten Alkylenoxiden zu Polyetherpolyolen geeignet. Weitere, im Rahmen der Erfindung geeignete Polyole entstehen durch Polymerisation von Tetrahydrofuran (Poly-THF). Polyetherpolyole mit 2, 3 oder 4 OH-Gruppen sind bevorzugt. Geeignete Polyetherpolyole sind dem Fachmann bekannt.

Die Funktionalität der Polyole soll im Durchschnitt von 2 bis 6 betragen, insbesondere über 2,4. Es können auch Gemische eingesetzt werden, wobei einzelne Bestandteile eine unterschiedliche Anzahl von OH-Gruppen enthalten können. Es ist zweckmäßig keine aminogruppenhaltigen Polyole einzusetzen. So wird eine katalytische Wirkung der Amine vermieden. Insbesondere geeignet sind Polyetherpolyole und/oder oleochemische Polyole. Diese sollen Hydroxylzahlen von 50 bis 400, bevorzugt von 100 bis 300 (mg KOH / g Festkörper) aufweisen. Die Hydroxylzahlen können gemäß der Vorschrift DIN 53240:1971-12 bestimmt werden.Das zahlenmittlere Molekulargewicht Mₙ soll bevorzugt unterhalb von 5000 g/mol, insbesondere aber zwischen 400 bis 2500 g/mol, liegen. Es wird mittels Gelpermeationschromatographie (GPC) mit Polystyrol als Standard bestimmt. Die Mischung der Polyole soll flüssig vorliegen. Solche Polyole sind kommerziell erhältlich.

Als zweiten Bestandteil muss ein erfindungsgemäß geeigneter Klebstoff als Komponente B ein oligomeres aliphatisches Polyisocyanat enthalten. Es handelt sich dabei um zwei und mehrfunktionelle Isocyanatoligomere. Unter denen als Polyisocyanate zu verwendenden Oligomeren von aliphatischen Isocyanaten sind die durch Dimerisierung, Trimerisierierung oder Oligomerisierung von mindestens 2, vorzugsweise 2 bis 20, insbesondere bevorzugt 2 bis 10, ganz besonders bevorzugt 2 bis 6 Molekülen aliphatischer und/oder cycloaliphatischer monomerer Diisocyanate erhältlichen Uretdione, Carbodiimide, Uretonimine, Isocyanaturate oder Iminooxadiazindionderivate.

Weiterhin sind unter denen als Polyisocyanate zu verwendenden Oligomeren von aliphatischen Isocyanaten die durch Reaktion von mindestens 2, vorzugsweise 2 bis 20, insbesondere bevorzugt 2 bis 10, ganz besonders bevorzugt 2 bis 6 Molekülen aliphatischen und/oder cycloaliphatischen monomeren Diisocyanate mit Alkoholen oder Wasser in einer Menge von weniger als 30 Gew.-% bezogen auf die Menge der eingesetzten Diisocyanate erhältlichen Allophanate oder Biurete zu verstehen.

Die zur Bildung der Oligomeren von aliphatischen Isocyanaten geeigneten Isocyanate sind aliphatische und/oder cycloaliphatische Isocyanate, wie hydriertes oder teilhydriertes MDI (H12MDI, H6MDI), Xylylendiisocyanat (XDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), Tetramethoxybutan-1,4-diisocyanat, Butan-1,4-diisocyanat, (HDI), Dicyclohexylmethandiisocyanat, Tetramethylen-, Hexamethylen-, Undecan-, Dodecamethylen-, 2,2,4-Trimethyl-hexan-2,3,3-Trimethyl-hexamethylendiisocyanat, Cyclohexan-1,4-diisocyanat, Ethylen-diisocyanat, Phthalsäure-bis-isocyanato-ethylester, Trimethylhexamethylendiisocyanat, 1,4-Diisocyanatobutan, 1,12-Diisocyanato-dodecan und Dimerfettsäurediisocyanat, Lysindiisocyanat, 4,4'-Dicyclohexylmethandiisocyanat, 1,3-Cyclohexan- oder 1,4-Cyclohexandiisocyanat.

Als mindestens trifunktionelle oligomere Isocyanate geeignet sind beispielsweise Polyisocyanate, die durch Trimerisation von Diisocyanaten gebildet werden, beispielsweise Isocyanurate.

In einer Ausführungsform sind als monomere Isocyanate insbesondere TMXDI, HDI oder IPDI geeignet. Besonders bevorzugte Oligomere sind Uretdione, Carbodiimide, Allophanate, Biurete, Isocyanurate, Uretonimine oder Iminooxadiazindionderivate der genannten Isocyanate. Dabei sind als Oligomere von aliphatischen Isocyanaten insbesondere Isocyanurate, Biurete, Carbodiimide oder Uretonimine, insbesondere auf Basis von HDI oder IPDI zu bevorzugen.

In einer anderen Ausführungsform ist es möglich, zusätzlich zu den aliphatischen Isocyanaten anteilig aromatische Diisocyanate zuzusetzen, ihre Carbodiimide oder Polyisocyanate. Insbesondere sind die Isomere des MDI geeignet, wie 2,4'- oder 4,4'- oder polymeres MDI. Die Menge kann bis zu 80 Mol-% aller NCO-Gruppen betragen.

In einer anderen Ausführungsform sollen die Isocyanate der Komponente B keine wesentlichen Anteile von monomeren, insbesondere flüchtigen Diisocyanaten enthalten. Das kann durch die Auswahl von polymeren oder oligomeren Isocyanatderivaten erfolgen. In einer anderen Ausführungsform kann die Komponente B trifunktionelle Isocyanatderivate enthalten, wie solche, die durch Trimerisation oder Oligomerisation von Diisocyanaten entstehen. Ganz besonders bevorzugt sind Trimere aus HDI oder IPDI. Die Menge der Isocyanate wird so ausgewählt, dass das NCO:OH-Verhältnis der Komponente A und B zwischen 0,8:1 bis 1,1:1 beträgt.

Mit den reaktiven Bestandteilen können erfindungsgemäß geeignete PU-Klebstoffe hergestellt werden. Diese können gegebenenfalls zusätzlich Additive enthalten, um Verarbeitungseigenschaften des PU-Klebstoffs zu beeinflussen. Additive sind beispielsweise Katalysatoren, wie Zinnverbindungen, wie DBTL, Eisenverbindungen, wie Fe-Acetylacetonat, oder tertiäre Amine, wie DABCO; Rheologiehilfsmittel, Viskositätsregler, pH-Regler; Entschäumungsmittel, Emulgatoren, Haftvermittler, Pigmente, wie Titandioxid, Ruß, Kieselsäuren, Schichtsilikate; Microhohlkugeln; Farbstoffe; Stabilisatoren, wie Antioxidantien oder Lichtschutzmittel; Wachse, wie natürliche Wachse, chemisch modifizierte Wachse und synthetische Wachse; Verlaufsmittel, Entgasungsmittel oder Klebrigmacher (Tackifier), wie aromatische, aliphatische oder cycloaliphatische Kohlenwasserstoff-Harze.

Solche Additive sind dem Fachmann bekannt. Die Additive sollen so gewählt werden, dass sie nach der Vernetzung nicht aus der PU-Klebstoffschicht migrieren oder verdampfen. Flüchtige Verbindungen, wie beispielsweise organische Lösemittel, sollen bevorzugt nicht enthalten sein. Die Additive oder Zusatzstoffe können in einem geeigneten 2K-PU-Klebstoff bis zu 20 Gew.-%, vorzugsweise bis 10 Gew.-%, insbesondere bis zu 3 Gew.-% bezogen auf den Klebstoff enthalten sein.

Da in einer bevorzugten Ausführungsform eine Verwendung der verklebten Formkörper in der Verpackung von Lebensmitteln vorgesehen ist, ist es zweckmäßig, entsprechende lebensmittelrechtlich oder gesundheitlich unbedenkliche Rohstoffe zu verwenden, beispielsweise sollen keine Schwermetallkatalysatoren, wie Sn-Verbindungen, enthalten sein. Es ist darauf zu achten, dass möglichst geringe Anteile an migrationsfähigen, niedermolekularen Substanzen in dem Klebstoff vorliegen. Insbesondere sollen bei einem Kontakt mit einem wässrigen Füllgut keine Substanzen aus der Beschichtung gelöst werden. Beispielsweise sollen keine aromatischen Amine nach dem Vernetzen des Klebstoffs vorhanden sein.

Der erfindungsgemäß eingesetzte Klebstoff ist ein 2-Komponenten-PU-Klebstoff. Dieser muss bei Raumtemperatur (25°C) flüssig sein. Die Komponenten werden kurz vor dem Verkleben gemischt. In diesem Falle ist eine geeignete Viskosität unmittelbar nach dem Mischen zu bestimmen. Bevorzugt ist ein Bereich von 500 bis 5000 mPas bei einer Temperatur von 25°C (Viskosität gemessen mit Brookfield RVT, gemäß EN ISO 2555).
Die Viskosität des Beschichtungsmittels wird dem Applikationsverfahren angepasst. Die Viskosität der erfindungsgemäß geeigneten Klebstoffe soll unmittelbar nach dem Mischen der Komponente zwischen 300 mPas bis zu 10000 mPas bei Applikationstemperatur betragen, wobei diese unterhalb von 50 °C liegt. Bevorzugt ist ein Bereich von 500 bis 5000 mPas bei einer Temperatur zwischen 15° bis 50 °C, insbesondere 25°C (Viskosität gemessen mit Brookfield RVT, gemäß EN ISO 2555). Werden bei Raumtemperatur höherviskose PU-Klebstoffe eingesetzt, so ist es zweckmäßig, die Beschichtungstemperatur zu erhöhen, so dass eine ausreichend niedrige Viskosität des Klebstoffs zur Applikation sichergestellt ist.

Die erfindungsgemäßen Formkörper werden durch Mischen und Verkleben der Granulate hergestellt. Dabei werden die Granulate in der passenden Teilchengröße ausgewählt und vorgemischt. Diese Mischung wird dann mit dem Anteil des bereits gemischten 2K-PU-Klebstoffs zusammengebracht und danach vermischt und anschließend zu einem Formkörper geformt. Danach vernetzt die Mischung zu einem vernetzten Formkörper.

Die Menge des 2K-PU-Klebstoffs soll bevorzugt zwischen 10 bis 50 Gew.-%, insbesondere zwischen 10 bis 30 Gew.-% bezogen auf die Mischung Klebstoff/Granulat betragen. Dabei ist es vorteilhaft, bei gröberen Granulaten weniger Klebstoff einzusetzen, bei feineren Granulaten ist eine größere Menge Klebstoff zweckmäßig, beispielsweise bei Granulaten im Bereich unter 2 mm Teilchengröße ca. 20 - 30% Klebstoff, bei Granulaten im Bereich über 5 mm ca. 10 - 20% Klebstoff.

Die Menge der Mischung aus Granulaten und 2K-PU-Klebstoff beträgt bevorzugt 50 bis 100 Gew.-%, weiter bevorzugt 80 bis 100 Gew.-%, und noch bevorzugter 90 bis 100 Gew.-% bezogen auf den Formkörper.

In einer Ausführungsform enthält der Formkörper 10 bis 30 Gew.-% 2K-PU-Klebstoffe und 90 bis 10 Gew.-% Granulate aus pflanzlichen Rohstoffen bezogen auf den Formkörper.

Durch die Teilchenform der Granulate können in den vernetzten Formkörpern noch Hohlräume enthalten sein. Diese sind in sich geschlossen, es sollen keine durchgängigen Kanäle gebildet werden. Die Hohlräume erhöhen auch die Elastizität der verklebten Formkörper.

Ein weiterer Gegenstand der Erfindung ist ein Verfahren zum Verkleben von Granulaten aus natürlichen Rohstoffen, insbesondere Korkgranulaten, wobei ein erfindungsgemäß geeigneter reaktiver 2K-PU-Klebstoff eingesetzt wird. Dabei werden die Granulate in der passenden Größenverteilung ausgewählt. Der 2K-PU-Klebstoff wird vorgemischt im geeigneten Mengenverhältnis. Die Menge des PU-Klebstoffs soll 10 bis 30 Gew.-% der Summe Granulat/Klebstoff betragen. Das Auftragen des PU-Klebstoffs kann durch bekannte Verfahren geschehen, beispielsweise durch Sprühen, Tauchen, Extrudieren oder Beschichten in einer Trommel. Dabei werden die Granulatteilchen bewegt und bevorzugt von allen Seiten mit einer Klebstoffschicht bedeckt. Da der erfindungsgemäß eingesetzte PU-Klebstoff flüssig ist, bildet sich eine durchgehende Beschichtung auf den Granulatteilchen. Es soll mindestens eine teilweise Filmbildung sichergestellt werden. Das kann gegebenenfalls durch eine Erwärmung des Beschichtungsmittels vor dem Auftragen oder durch eine Erwärmung bei dem Beschichtungsvorgang erleichtert werden, beispielsweise bis 50 °C.

Nach Herstellen einer Mischung aus Klebstoff und Granulaten, beispielsweise dem Korkgranulat, wird die Mischung geformt und gegebenenfalls verdichtet. Danach soll der Klebstoff vernetzen. Die Verklebung oder Vernetzung der Formkörper kann durch bekannte Maßnahmen unterstützt werden. Ein Erwärmen kann zum Beispiel durch IR-Strahlung, durch Überleiten von erwärmten Gasen oder durch Erwärmen der Form geschehen. Die Temperaturen können zwischen 20 °C bis zu 150 °C betragen, insbesondere zwischen 80 °C bis zu 140 °C. Die Erwärmungsdauer kann zwischen von 2 min. bis 60 min. betragen. Es ist darauf zu achten, dass das Substratmaterial bei dieser Temperatur keinerlei negative Veränderungen erleidet. Auch Verfärbungen des Substratmaterials sollten vermieden werden.

In einer Ausführungsform der Erfindung kann die Vernetzung auch ohne Katalysatoren durchgeführt werden.

Die nach dem erfindungsgemäßen Verfahren hergestellten Formkörper können in einer besonderen Ausführungsform als runder oder zylindrischer Körper hergestellt werden. Es ist auch möglich, Formteile beispielsweise als dicken Körper herzustellen. Aus diesen wird anschließend durch an sich bekannte Verfahren das Endprodukt, beispielsweise ein Stopfen, hergestellt. Die endgültige Form kann beispielsweise durch Sägen, Schneiden oder Stanzen hergestellt werden. Die Größe der Endprodukte kann in weiten Grenzen variieren, beispielsweise können Korkstopfen für Flaschen in den bekannten Abmessungen hergestellt werden. Diese weisen gute Eigenschaften auf, sie zeigen eine hohe Elastizität.

Erfindungsgemäß werden Korkstopfen hergestellt. Es ist gegebenenfalls möglich, dass ein fertig geformter Korkstopfen noch weiter bearbeitet wird. Dabei kann er beispielsweise gereinigt, geschliffen oder bedruckt werden. Eine weitere Vorbehandlung ist üblicherweise nicht notwendig. Auf die Korkstopfen können, soweit es noch notwendig ist, weitere Oberflächenbeschichtungen aufgebracht werden.

Die entstehenden Formteile sind sehr flexibel. Da bei der Applikation eines Stopfens dieser zusammengedrückt und dann an seinen Bestimmungsort gebracht wird, sollen die erfindungsgemäßen Körper soweit verklebt sein, dass eine elastische Verformung möglich ist. Der vernetzte Klebstoff darf nicht so spröde oder so vernetzt sein, dass dabei Risse und Brüche in dem Formkörper auftreten können. Die Vernetzung muss aber so vollständig sein, dass insbesondere keine niedermolekularen Bestandteile enthalten sind, die migrieren oder durch wässrige Lösungen herausgelöst werden können. Durch die Auswahl der Polyole und der Isocyanate wird ein Klebstoff bereitgestellt, sodass die geforderten anwendungstechnischen Eigenschaften erfüllt werden.

Eine wichtige Eigenschaft ist die Kompressibilität des verklebten und vernetzten Formkörpers, insbesondere des Korkstopfens. Diese soll ein Verformen und danach ein Rückverformen zu der ursprünglichen Form sicherstellen. Dabei wird das Verhältnis K₁ von Kompressionskraft F (compression) zu Rückstellkraft F (recovery) festgestellt (Messverfahren zur Korkprüfung nach der portugiesischen Norm NP 2803, Kraftmessung nach NP 2803-3 (1996) bei 23°C und 50 % rel. Luftfeuchtigkeit. Dabei soll das Verhältnis K₁ = F (compression): F (recovery) von 5 bis 10 betragen. Dabei ist der verklebte Formkörper stabil, er bricht oder zerfällt nicht. Ist der Anteil der aromatischen Isocyanate im Klebstoff zu hoch, hat der Formkörper keine ausreichende Rückstellkraft. Ist die Vernetzungsdichte zu gering, ist das Rückstellvermögen ebenfalls nicht ausreichend. Ist die Vernetzung zu hoch, ergeben sich harte Formkörper, die schlecht komprimierbar sind.

Erfindungsgemäße Formkörper zeigen eine gute Kompressibilität. Korkformkörper, verklebt mit der bevorzugten Ausführungsform eines Klebstoffs mit aliphatischen oligomeren Isocyanaten, ergeben Elastizitätswerte, die denen von natürlichen Korkstopfen entsprechen.

Die erfindungsgemäßen verklebten Formkörper sollen insbesondere keine niedermolekularen migrierenden Substanzen enthalten. Durch die Auswahl der Polyole kann die Wasserfestigkeit erhöht werden. Nach der Vernetzung sind die einzelnen Inhaltsstoffe verträglich, sie schwitzen nicht aus und beeinträchtigen nicht die Haftung zu den Substratmaterialien. Durch die Auswahl der Polyole, die mit den Isocyanaten umgesetzt werden, kann die Polarität des Klebstoffs beeinflusst werden. Aliphatische Anteile ergeben eher unpolare Eigenschaften, Ether- oder Estergruppen aufweisende Polyole sind eher polar. Damit kann eine gute Haftung zu den Granulaten sichergestellt werden. Durch den Anteil an Urethangruppen wird ebenfalls eine gute Haftung zu den organischen Substraten sichergestellt. Ebenso werden elastische Eigenschaften der Klebstoffschicht ermöglicht.

Ein erfindungsgemäßes Verfahren verbessert den Herstellungsprozess. Eine homogene Mischung der Ausgangsmaterialien wird verbessert. Ebenso wird die Belastung der Umgebungsluft mit flüchtigen monomeren Isocyanaten vermindert. Es wird ein elastisches vernetztes Produkt erhalten.

### Beschichtungsverfahren:

Es werden 88 g eines Korkgranulats mit einer Teilchengröße zwischen 3 bis 7 mm zusammen mit 12 g eines Klebstoffs 1, 2, 3 oder 4 zusammengegeben und in einer Trommel gewälzt. Nach einer Mischzeit von 10 Min. wird das beschichtete Korkgranulat entnommen und in eine zylindrische Form gegeben und verdichtet. Der Körper härtet für 45 min bei 130°C aus. Die hergestellten Formkörper sind zylindrisch (Durchmesser 2,5 cm, Länge 10 cm) und können auf eine passende Größe konfektioniert werden.

| | Klebstoff 1 | Klebstoff 2 | Klebstoff 3 | Klebstoff 4 (Vergleich) |
|---|---|---|---|---|
| Polyethertriol (Mₙ 4800 g/mol) | 40 | -- | -- | -- |
| Polyethertriol (Mₙ 750 g/mol) | 60 | -- | -- | -- |
| Polyethertriol (Mₙ 1050 g/mol) | -- | 50 | 100 | -- |
| Rizinusöl (Mₙ 1000 g/mol) | -- | 50 | -- | 100 |
| HDI-Isocyanurat | 60 | 60 | 30 | -- |
| polymeres MDI | -- | -- | 20 | 40 |
| Stabilisator | -- | -- | 0,5 | -- |
| Viskosität 25°C (mPas) | 1000 | 1200 | 800 | 750 |
| Verhältnis K₁ von Kompressionskraft F (compression) zu Rückstellkraft F (recovery): K₁ = F (compression) : F (recovery) | 7 | 8 | 9 | 12 |

## Patentansprüche

1. Formkörper umfassend ein Granulat aus pflanzlichen Rohstoffen mit einer Teilchengröße, die mit Hilfe der Siebanalyse bestimmt wird, wie in den Normen DIN 66165-1:1987-04 und DIN 66165-2:1987-04 beschrieben, von 0,5 bis 15 mm verklebt mit einem 2K-PU-Klebstoff, wobei der Klebstoff als Isocyanatkomponente Oligomere von aliphatischen Isocyanaten enthält, **dadurch gekennzeichnet, dass** der Formkörper als Korkstopfen ausgebildet ist.

2. Formkörper nach Anspruch 1, wobei der Klebstoff bei Raumtemperatur flüssig ist.

3. Formkörper nach Anspruch 1 oder 2, **dadurch gekennzeichnet, dass** der Formkörper 10 bis 30 Gew.-% 2K-PU-Klebstoffe und 90 bis 10 Gew.-% Granulate aus pflanzlichen Rohstoffen enthält.

4. Formkörper nach Anspruch 3, **dadurch gekennzeichnet, dass** er Korkgranulate als Granulate aus pflanzlichen Rohstoffen enthält.

5. Formkörper nach Anspruch 4, **dadurch gekennzeichnet, dass** der 2K-PU-Klebstoff Polyole mit einer mittleren Funktionalität zwischen 2 bis 6 enthält.

6. Formkörper nach einem der Ansprüche 1 bis 5, **dadurch gekennzeichnet, dass** als Isocyanatkomponente Isocyanurate, Biurete, Carbodiimide oder Uretonimine eines aliphatischen Diisocyanats eingesetzt werden, insbesondere auf Basis von HDI oder IPDI.

7. Formkörper nach einem der Ansprüche 1 bis 6, **dadurch gekennzeichnet, dass** der Klebstoff vernetzt ist.

8. Formkörper nach Anspruch 7, **dadurch gekennzeichnet, dass** der vernetzte Formkörper ein Verhältnis K₁ von Kompressionskraft F (compression) zu Rückstellkraft F (recovery), also K₁ = F (compression) : F (recovery), von 5 bis 10 aufweist (Messverfahren zur Korkprüfung nach der portugiesischen Norm NP 2803, Kraftmessung nach NP 2803-3 (1996) bei 23°C und 50 % rel. Luftfeuchtigkeit).

9. Verfahren zum Herstellen eines Formkörpers nach einem der Ansprüche 1 bis 8, wobei ein flüssiger 2K-Polyurethanklebstoff aus einer Polyolkomponente und einer Isocyanatkomponente, die Oligomere von aliphatischen Isocyanaten enthält, mit den Granulaten aus pflanzlichen Rohstoffen vermischt wird, in einer Menge, dass die Granulate von dem Klebstoff umhüllt werden, das Gemisch geformt wird und danach bei einer Temperatur von 80°C bis 140°C ausgehärtet wird.

10. Verfahren nach Anspruch 9, **dadurch gekennzeichnet, dass** 10 bis 30 Gew.-% (bezogen auf den Formkörper) des 2K-PU-Klebstoffs mit den Granulaten unter Umwälzen gemischt werden.

11. Verfahren nach einem der Ansprüche 9 oder 10, **dadurch gekennzeichnet, dass** der 2K-PU-Klebstoff unmittelbar nach Mischen eine Viskosität unter 5000 mPas (25°C) aufweist (Viskosität gemessen mit Brookfield RVT, gemäß EN ISO 2555:1999).

12. Verwendung eines Formkörpers nach einem der Ansprüche 1 bis 8 als Teil einer Verpackung für Lebensmittel.

## Claims

1. A shaped body comprising a granulate of vegetable raw materials having a particle size, determined by means of sieve analysis, as described in the DIN 66165-1:1987-04 and DIN 66165-2:1987-04 standards, of 0.5 to 15 mm, adhesively bonded by means of a 2K PU adhesive, the adhesive containing oligomers of aliphatic isocyanates as isocyanate components, **characterized in that** the shaped body is designed as a cork stopper.

2. The shaped body according to claim 1, wherein the adhesive is liquid at room temperature.

3. The shaped body according to claim 1 or 2, **characterized in that** the shaped body contains from 10 to 30 wt.% of 2K PU adhesives and from 90 to 10 wt.% of granulates of vegetable raw materials.

4. The shaped body according to claim 3, **characterized in that** it contains cork granulates as the granulates of vegetable raw materials.

5. The shaped body according to claim 4, **characterized in that** the 2K PU adhesive contains polyols having an average functionality of between 2 and 6.

6. The shaped body according to one of claims 1 to 5, **characterized in that** isocyanurates, biurets, carbodiimides or uretonimines of an aliphatic diisocyanate are used as isocyanate components, in particular on the basis of HDI or IPDI.

7. The shaped body according to one of claims 1 to 6, **characterized in that** the adhesive is crosslinked.

8. The shaped body according to claim 7, **characterized in that** the crosslinked shaped body has a ratio K₁ of compressive force F (compression) to restoring force F (recovery), i.e. K₁ = F (compression): F (recovery), of 5 to 10 (measurement method for cork inspection in accordance with Portuguese standard NP 2803; force measurement in accordance with NP 2803-3 (1996) at 23 °C and 50% relative humidity).

9. A method for producing a shaped body according to one of claims 1 to 8, wherein a liquid 2K polyurethane adhesive made from a polyol component and an isocyanate component that contains oligomers of aliphatic isocyanates is mixed with the granulates from vegetable raw materials in an amount such that the granulates are encased by the adhesive, the mixture is formed and is subsequently cured at a temperature of from 80 °C to 140 °C.

10. The method according to claim 9, **characterized in that** 10 to 30 wt.% (based on the shaped body) of the 2K PU adhesive is mixed with the granulates by means of circulation.

11. The method according to one of claims 9 or 10, **characterized in that**, immediately after mixing, the 2K PU adhesive has a viscosity of less than 5000 mPas (25 °C) (viscosity measured by a Brookfield RVT, in accordance with EN ISO 2555:1999).

12. The use of a shaped body according to one of claims 1 to 8 as part of a packaging for food.

## Revendications

1. Corps moulé comprenant un granulat constitué de matières premières végétales ayant une taille de particules allant de 0,5 à 15 mm, déterminée par analyse granulométrique, telle que décrite dans les normes DIN 66165-1:1987-04 et DIN 66165-2:1987-04, et collé avec un adhésif au polyuréthane à deux composants, l'adhésif contenant comme composant isocyanate un oligomère d'isocyanates aliphatiques, **caractérisé en ce que** le corps moulé est réalisé sous la forme d'un bouchon de liège.

2. Corps moulé selon la revendication 1, dans lequel l'adhésif est liquide à la température ambiante.

3. Corps moulé selon la revendication 1 ou 2, **caractérisé en ce que** le corps moulé contient de 10 à 30 % en poids d'adhésif au polyuréthane à deux composants et de 90 à 10 % en poids de matières premières végétales.

4. Corps moulé selon la revendication 3, **caractérisé en ce qu'**il contient un granulat de liège en tant que granulat de matières premières végétales.

5. Corps moulé selon la revendication 4, **caractérisé en ce que** l'adhésif au polyuréthane à deux composants contient des polyols ayant une fonctionnalité moyenne allant de 2 à 6.

6. Corps moulé selon l'une des revendications 1 à 5, **caractérisé en ce qu'**un isocyanurate, un biuret, un carbodiimide ou une urétonimine d'un diisocyanate aliphatique est utilisé comme composant isocyanate, en particulier à base de HDI ou d'IDPI.

7. Corps moulé selon l'une ou plusieurs des revendications 1 à 6, **caractérisé en ce que** l'adhésif est réticulé.

8. Corps moulé selon la revendication 7, **caractérisé en ce que** le corps moulé réticulé possède un rapport K₁ de force de compression F (compression) à la force de rappel F (recovery), donc K₁ = F (compression) : F (recovery), de 5 à 10 (procédé de mesure pour le test du liège selon la norme portugaise NP 2803, mesure de force selon NP 2803-3 (1996) à 23 °C et à 50 % d'humidité relative).

9. Procédé de fabrication d'un corps moulé selon l'une des revendications 1 à 8, dans lequel un adhésif liquide au polyuréthane à deux composants, composé d'un composant polyol et d'un composant isocyanate contient des oligomères d'isocyanates aliphatiques, est mélangé aux granulés de matières premières végétales, dans une quantité telle que les granulés sont enrobés par l'adhésif, le mélange est mis en forme puis chauffé à une température comprise allant de 80 °C à 140 °C.

10. Procédé selon la revendication 9, **caractérisé en ce que** de 10 à 30 % en poids (par rapport au corps moulé) de l'adhésif liquide au polyuréthane à deux composants sont mélangés au granulat par brassage.

11. Procédé selon l'une des revendications 9 ou 10, **caractérisé en ce que** l'adhésif au polyuréthane à deux composants présente, juste après le mélange, une viscosité inférieure à 5000 mPas (à 25 °C) (viscosité mesurée par viscosimètre Brookfield RVT, selon EN ISO 2555:1999).

12. Application d'un corps moulé selon l'une ou plusieurs des revendications 1 à 8 comme partie d'un emballage alimentaire.
